Europäisches Patentamt

European Patent Office

Office européen des brevets

(11) Veröffentlichungsnummer: **0 398 160**
**A2**

## (12) EUROPÄISCHE PATENTANMELDUNG

(21) Anmeldenummer: **90108834.4**

(51) Int. Cl.⁵: **G02B 6/38**

(22) Anmeldetag: **10.05.90**

(30) Priorität: **17.05.89 DE 8906082 U**

(43) Veröffentlichungstag der Anmeldung:
**22.11.90 Patentblatt 90/47**

(84) Benannte Vertragsstaaten:
**AT BE CH DE FR GB IT LI NL SE**

(71) Anmelder: **Siemens Aktiengesellschaft**
**Wittelsbacherplatz 2**
**D-8000 München 2(DE)**

(72) Erfinder: **Krausse, Peter, Dipl.-Ing.**
**Flurstrasse 1**
**D-8011 Aschheim(DE)**
Erfinder: **Hirseland, Klaus, Dipl.-Ing. (FH)**
**Kirchenstrasse 31**
**D-8034 Germering(DE)**

(54) **Lichtwellenleiter-Steckverbinder mit einer in eine Schutzhülse eingesetzten Führungsbuchse.**

(57) Bei Lichtwellenleiter-Steckverbindern werden beidseits in einer Hülse Metallstifte in denen ein Lichtwellenleiter fixiert ist, eingesteckt und über diese Hülse aufeinander zentriert. Diese Hülse besteht aus zwei längsgeschlitzten Buchsen (1, 2), die umfangsseitig um 180° verdreht aufeinander gepreßt sind.

## FIG 1

## Lichtwellenleiter-Steckverbinder mit einer in eine Schutzhülse eingesetzten Führungsbuchse

Die Erfindung bezieht sich auf einen Lichtwellenleiter-Steckverbinder mit einer in eine Schutzhülse eingesetzten Führungsbuchse, zur beidseitigen Aufnahme von Lichtwellenleiter-Steckern, bei denen das Ende der Lichtwellenleiter-Faser in einer Kapillare eines Metallstiftes fixiert ist, an dessen Frontseite das Lichtwellenleiter-Faserende endet und die Führungsbuchse einen in axialer Richtung verlaufenden Schlitz aufweist und in der Schutzhülse frei beweglich gehaltert ist.

Eine derartige Anordnung ist in der deutschen Gebrauchsmusteranmeldung G 88 11 463.5 näher beschrieben.

Die Lichtwellenleiter-Steckverbinder als solche sind dabei in DIN 47256 und DIN 47257 enthalten. Die Reibkräfte, die beim Einschieben der Stifte in die geschlitzte Buchse entstehen, sollen dabei möglichst gering gehalten werden.

Die Haltekraft auf die in der Hülse eingespannten Stifte sollte dagegen radial gleichmäßig verteilt sein, um einen dämpfungserhöhenden Winkelversatz durch am Ende der Steckverbinder angreifende Biegemomente zu verhindern. Sie sollte ferner unabhängig von ihrer konstruktiv bedingten Länge einen konstanten Wert erreichen. Die für einen dämpfungsarmen Lichtwellenleiter-Übergang erforderlichen Genauigkeiten der mechanischen Abmessungen machen es erforderlich, daß die Buchse aus einem verschleiß- und abriebfesten Werkstoff besteht. Daher wurden dabei in der Länge geschlitzte Buchsen aus Hartmetall bzw. Keramik verwendet. Durch die einseitige Öffnung der Buchse sind die Haltekräfte auf die eingespannten Stifte radial nicht gleichmäßig verteilt. Sie sind ferner von der Länge der Buchse abhängig.

Der Erfindung liegt die Aufgabe zugrunde, eine einfache Anordnung vorzuschlagen, die die anfangs genannten Forderungen erfüllt.

Dies wird bei einer Anordnung der eingangs genannten Art gemäß der Neuerung dadurch gelöst, daß diese Buchse von einer weiteren aus einem federnden Werkstoff bestehenden Buchse spannend umfaßt wird.

Weitere vorteilhafte Ausbildungen der Erfindung sind in den Unteransprüchen enthalten.

Nachstehend wird die Erfindung anhand von Ausführungsbeispielen näher erläutert.

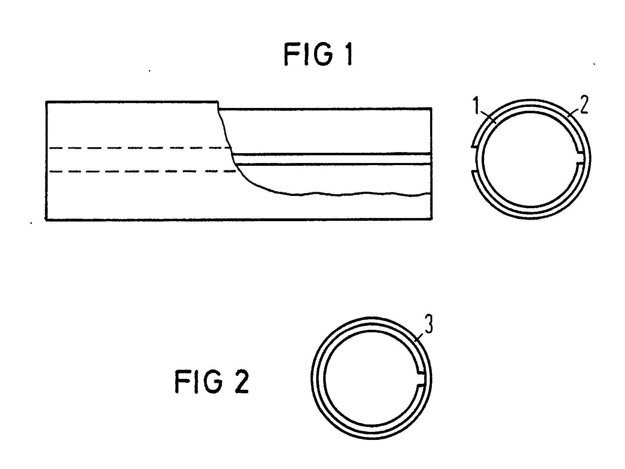

Figur 1 zeigt in teilweise aufgeschnittenem Längsriß und danebenstehenden Querschnitt zwei geschlitzte Buchsen übereinander.

Figur 2 zeigt einen Querschnitt für eine elastische Außenbuchse.

Auf eine in der Länge geschlitzte, federnde Buchse 1, zum Beispiel aus Keramik, wird derart eine zweite ebenfalls längsgeschlitzte Buchse 2 aus einem federnden metallischen Werkstoff geschoben, daß ihre Schlitze um 180° versetzt sind.

Da die Keramikbuchse 1 durch die sie umschließende Metallbuchse 2 zusammengedrückt wird, ist ihr erreichbarer Federweg vergrößert worden. Das bedeutet, daß eine größere Toleranz bei dem zu fertigenden Innendurchmesser zugelassen werden kann.

Durch den Versatz der Schlitze zueinander werden die Haltekräfte auf die hineinzuschiebenden bekannten Stifte (nicht dargestellt) der Lichtwellenleiter-Stecker radial annähernd gleichmäßig verteilt.

Sie können unabhängig von der Länge der Keramikbuchse 1 auf eine gewünschte Größe ausgelegt werden, indem die Wandstärke und/oder die Länge und/oder der Werkstoff der sie umgebenden Metallbuchse 2 mit guten federnden Eigenschaften versehen ist. Diese oben beschriebenen Effekte können auch mit einer geschlossenen Buchse 3 aus elastischem Material zum Beispiel Gummi oder Kunststoff erreicht werden.

Auf diese Weise können mit einfachen Mitteln die eingangs genannten Forderungen bei solchen Verbindungsbuchsen für Lichtwellenleiter erfüllt werden.

## Ansprüche

1. Lichtwellenleiter-Steckverbinder mit einer in eine Schutzhülse eingesetzten Führungsbuchse zur beidseitigen Aufnahme von Lichtwellenleiter-Steckern, bei denen das Ende der Lichtwellenleiter-Faser in einer Kapillare eines Metallstiftes fixiert ist, an dessen Frontseite das Lichtwellenleiter-Faserende endet und die Führungsbuchse einen in axialer Richtung verlaufenden Schlitz aufweist und in der Schutzhülse frei beweglich gehaltert ist, **dadurch gekennzeichnet,** daß diese Buchse (1) von einer weiteren (2) aus einem federnden Werkstoff bestehenden Buchse spannend umfaßt wird.

2. Lichtwellenleiter-Steckverbinder nach Anspruch 1, **dadurch gekennzeichnet,** daß die äußere Buchse (2) ebenfalls längsgeschlitzt ist und deren Schlitz gegenüber dem der inneren Buchse um 180° in Umfangsrichtung versetzt ist.

3. Lichtwellenleiter-Steckverbinder nach einem der vorhergehenden Ansprüche, **dadurch gekennzeichnet,** daß die Buchse (1) aus einem keramischen Material besteht und die äußere Buchse (2) aus einem Federmetall insbesondere Stahl.

# FIG 1

# FIG 2